# EUROPÄISCHE PATENTANMELDUNG

(11) **EP 4 099 513 A1**
(43) Veröffentlichungstag der Anmeldung: **07.12.2022**
(21) Anmeldenummer: 22164125.1
(22) Anmeldetag: 24.03.2022
(51) Int. Cl.: H01R 13/514, H01R 31/06, H01R 13/62, H01R 13/645

(54) **MESSMODUL-SYSTEM**

(30) Priorität: 31.05.2021 DE 102021113979
(71) Anmelder: IPETRONIK GmbH & Co. KG, 76532 Baden-Baden (DE)
(72) Erfinder: Haller, Dirk, 77836 Rheinmünster (DE); Walter, Markus, 76547 Sinzheim (DE)
(74) Vertreter: Pfrang, Tilman

(57) **Zusammenfassung**

Die Erfindung betrifft ein Messmodul-System mit mindestens zwei Messdaten erzeugenden Messmodulen, die mit einer Steuer- und/oder Auswerteeinrichtung und/oder miteinander Daten austauschen, wobei mindestens eines der mindestens zwei Messmodule mindestens eine erste integrale, insbesondere ortsfeste, elektrische Kontakteinrichtung (14) aufweist und mindestens ein weiteres der mindestens zwei Messmodule mindestens eine zweite integrale, insbesondere ortsfeste, elektrische Kontakteinrichtung (14) aufweist, wobei die erste und zweite elektrische Kontakteinrichtung (14) miteinander unmittelbar, insbesondere durch Aneinanderstecken, verbindbar oder verbunden sind.

## Beschreibung

Die Erfindung betrifft ein Messmodul-System, ein Verfahren zum Herstellen eines solchen Systems sowie ein Verfahren zum Konfigurieren eines solchen Systems.

Derartige Messmodul-Systeme sind grundsätzlich, beispielsweise aus DE 10 2008 062 994 A1, bekannt. Dort wird eine Messanordnung mit mehreren Messmodulen beschrieben, die über ein Datennetz bzw. Leitungen miteinander verbunden sind. Entsprechende Verbindungsleitungen werden üblicherweise durch Kabel realisiert. Die Verwendung, insbesondere Konfiguration einer derartigen Messmodul-Anordnung wird noch als vergleichsweise aufwändig und fehleranfällig empfunden.

Es ist Aufgabe der Erfindung, ein Messmodul-System vorzuschlagen, das in der Verwendung, insbesondere hinsichtlich einer konkreten Konfiguration von miteinander verbundenen Messmodulen, vergleichsweise einfach und insbesondere sicher in der Anwendung ist. Weiterhin ist es Aufgabe der Erfindung, ein entsprechendes Verfahren zur Herstellung eines Messmodul-Systems sowie ein entsprechendes Verfahren zur Konfiguration eines Messmodul-Systems vorzuschlagen.

Diese Aufgabe wird insbesondere durch die Merkmale des Anspruchs 1 gelöst.

Insbesondere wird die Aufgabe gelöst durch ein Messmodul-System mit mindestens zwei Messdaten erzeugenden Messmodulen, die mit einer Steuer- und/oder Auswerteeinrichtung und/oder miteinander Daten austauschen (können) bzw. entsprechend konfiguriert sind, wobei mindestens eines der mindestens zwei Messmodule mindestens eine erste integrale, insbesondere ortsfeste, elektrische Kontakteinrichtung aufweist und mindestens ein weiteres der mindestens zwei Messmodule mindestens eine zweite integrale, insbesondere ortsfeste, elektrische Kontakteinrichtung aufweist, wobei die erste und zweite elektrische Kontakteinrichtung miteinander unmittelbar, insbesondere durch Aneinanderstecken, verbindbar oder verbunden sind.

Ein Kerngedanke der Erfindung liegt darin, an mindestens zwei Messmodulen jeweils mindestens eine integrale (insbesondere ortsfeste) Kontakteinrichtung auszubilden, mit dem die Messmodule miteinander (unmittelbar) verbunden werden können.

Dadurch kann auf einfache Art und Weise eine (elektrische) Verbindung zwischen den Messmodulen (insbesondere zur Energie- und/oder Datenübertragung) erfolgen. Ein aufwändiges Verbinden durch Verbindungskabel (zur Verbindung der Messmodule untereinander bzw. miteinander) kann entfallen. Insgesamt wird dadurch ein Aufwand zur Konfiguration des Messmodul-Systems reduziert.

Unter einer integralen Kontakteinrichtung ist insbesondere eine Kontakteinrichtung zu verstehen, die Bestandteil des jeweiligen Messmoduls ist, also vorzugsweise gegenüber einem Hauptkörper des Messmoduls (in einem mit diesem verbunden Zustand) nicht oder nur geringfügig bewegt werden kann. Unter einer geringfügigen Bewegung ist insbesondere zu verstehen, dass sich kein Punkt der jeweiligen Kontakteinrichtung mehr als 2 cm oder mehr als 1 cm oder mehr als 5 mm oder mehr als 2 mm oder mehr als 0,2 mm gegenüber einem Hauptkörper des Messmoduls bewegen kann (in einem mit diesem verbunden Zustand). Insbesondere kann die entsprechende Kontakteinrichtung zumindest im Wesentlichen ortsfest sein, in dem Sinne, dass sie nicht oder zumindest im Wesentlichen nicht gegenüber dem Hauptkörper des Messmoduls bewegbar ist (in einem mit diesem verbunden Zustand).

In Ausführungsformen ist es möglich, dass die (jeweilige) Kontakteinrichtung (gegenüber dem Hauptkörper und/oder in sich) zumindest geringfügig bewegbar ist (in einem mit dem Hauptkörper verbunden Zustand), beispielsweise bei einem Federkontakt (was sogar bevorzugt ist). Wenn also eine Kontakteinrichtung in diesem Sinne geringfügig bewegbar ist, soll sie insbesondere immer noch als integrale bzw. ortsfeste Kontakteinrichtung verstanden werden.

Die Kontakteinrichtung kann lösbar (ggf. durch Lösen mindestens einer Schraubverbindung, beispielsweise mindestens eines Gehäuseteiles, insbesondere des Hauptkörpers, und/oder jedoch nicht durch Lösen eines Schnellverschlusses, wie beispielsweise durch Lösen eines Schnapp- und/oder Rastmechanismus mittels einer manuellen Betätigungseinrichtung, z. B. einer integral angeformten Betätigungseinrichtung, einer Taste, eines Hebel und/oder eines Schieber) oder nicht (zumindest nicht zerstörungsfrei) lösbar mit dem Hauptkörper verbindbar/verbunden sein.

Die (jeweilige) elektrische Kontakteinrichtung kann eine Vielzahl von Kontaktstellen aufweisen, die jeweils beispielsweise durch mindestens oder genau einen Vorsprung (z. B. Pin und/oder Stift) gebildet sein können und/oder durch mindesten oder genau eine Aufnahme.

Die Kontakteinrichtung umfasst mindestens einen, vorzugsweise mehrere Kontakte bzw. Kontaktstellen. In konkreten Ausführungsformen kann die Kontakteinrichtung mindestens zwei oder mindestens vier oder mindestens acht und/oder höchstens 20 oder höchstens zehn (Einzel-) Kontakte bzw. Kontaktstellen aufweisen. Diese können in mindestens oder genau einer Reihe oder mehreren Reihen angeordnet sein. In einer konkreten Ausführungsform weist die (jeweilige) Kontakteinrichtung neun Kontakte auf, die vorzugsweise in einer Reihe angeordnet sind.

Die jeweilige (elektrische) Kontakteinrichtung kann ein Gehäuse und/oder Rahmen aufweisen, der die Kontakteinrichtung nach außen begrenzt und ggf. teilweise oder vollständig in dem Hauptkörper des jeweiligen Messmodul eingebettet ist. Die (jeweilige) Kontakteinrichtung kann lösbar oder nicht (zerstörungsfrei) lösbar mit einem Hauptkörper des Messmoduls ausgebildet sein. Wenn die (jeweilige) Kontakteinrichtung lösbar ausgebildet ist, kann ein Lösen bzw. Verbinden beispielsweise durch Schrauben und/oder Klemmen und/oder Schnappen und/oder Rasten erfolgen (bzw. eine entsprechende Verbindung derartig konfiguriert sein).

Vorzugsweise ist die (jeweilige) Kontakteinrichtung so konfiguriert, dass sie nicht oder nur höchstens 5 cm oder höchstens 3 cm oder höchstens 1 cm oder höchstens 5 mm oder höchsten 2 mm über den Hauptkörper des Messmoduls hervorsteht (wenn im Falle einer zumindest geringfügig bewegbaren Kontakteinrichtung diese in einem Zustand bzw. einer Stellung vorliegt, bei der sie am weitesten von dem Hauptkörper vorspringt).

Die (jeweilige) elektrische Kontakteinrichtung kann als Baugruppe verstanden werden, die einen oder mehrere elektrische Kontakte sowie diese Kontakte zusammenfassende bzw. verbindende Strukturen aufweist, wie beispielsweise einen Rahmen und/oder ein Gehäuse und/oder eine Platte.

Die (jeweilige) Kontakteinrichtung kann in einer maximalen Ausdehnung höchstens 10 cm oder höchstens 5 cm ausgedehnt sein (wobei unter der maximalen Ausdehnung die Entfernung desjenigen Punktepaares der Kontakteinrichtung zu betrachten ist, das zueinander den größten Abstand aufweist). In einer Draufsicht (entlang einer Kontaktierungseinrichtung) kann die Kontakteinrichtung i) eine maximalen Ausdehnung von höchstens 8 cm oder höchstens 5 cm und/oder mindestens 4 mm oder mindestens 8 mm oder mindestens 15 mm aufweisen und/oder ii) eine Länge von höchstens 8 cm oder höchstens 4 cm und/oder mindestens 4 mm oder mindestens 8 mm oder mindestens 15 mm aufweisen und/oder iii) eine Breite von höchstens 2 cm oder höchstens 1 cm und/oder mindestens 2 mm und/oder iv) eine Tiefe von höchstens 5 cm oder höchstens 2 cm und/oder mindestens 2 mm betragen.

Die erste und/oder zweite Kontakteinrichtung kann mindestens eine Steckverbinder-Einrichtung, vorzugsweise Feder-Steckverbinder-Einrichtung, umfassen oder als solche ausgebildet sein. Insbesondere kann die erste und/oder zweite Kontakteinrichtung mindestens einen Stecker und/oder mindestens eine Buchse aufweisen. In konkreten Ausführungsformen kann die (jeweilige) Kontakteinrichtung nur Vorsprünge (Stecker) oder nur Aufnahmen (Buchsen) oder sowohl Vorsprünge (Stecker) als auch Aufnahmen (Buchsen) aufweisen.

Die (jeweilige bzw. erste und/oder zweite) Kontakteinrichtung kann konfiguriert sein, um eine elektrische Leistung (beispielsweise zur Energieversorgung des jeweiligen Messmoduls) und/oder Daten (insbesondere Messdaten und/oder BusDaten) zu übertragen.

Kontakte bzw. Kontaktstellen der (jeweiligen) Kontakteinrichtung können als insbesondere vergoldete Federkontakte (insbesondere Federkontakt-Stifte) ausgeführt bzw. Federkontaktaufnahmen (insbesondere vergoldete Federkontaktaufnahmen) ausgebildet sein.

Über die (jeweilige) Kontakteinrichtung wird vorzugsweise eine Spannungsversorgung und/oder ein Bussignal und/oder ein Steuersignal übertragen.

Vorzugsweise umfasst mindestens ein Messmodul eine erste Positionierhilfe, vorzugsweise umfassend eine Ausnehmung und/oder einen Vorsprung und/oder einen Magneten. Alternativ oder zusätzlich kann mindestens das mindestens eine und/oder mindesten ein weiteres Messmodul eine (insbesondere zur ersten komplementäre) zweite Positionierhilfe, vorzugsweise umfassend eine Ausnehmung und/oder einen Vorsprung und/oder einen Magneten, umfassen. Die Positionierhilfen können in Ausführungsformen miteinander zur Positionierung der Messmodule gegeneinander und/oder zur mechanischen Verbindung der Messmodule miteinander, verbindbar sein. Vorzugsweise ist die (jeweilige) Positionierhilfe separat (beispielsweise in einem Abstand von mindestens 1 cm oder mindestens 4 cm) gegenüber der (jeweiligen) Kontakteinrichtung vorgesehen bzw. nicht zur Übertragung von elektrischen Strömen (bzw. Signalen) konfiguriert.

In konkreten Ausführungsformen kann eine mechanische Verbindung der Messmodule untereinander durch mindestens einen (vorzugsweise mehrere) Haftmagnete(n) (ggf. auf der einen Seite) und/oder mindestens eine Haftschiene (ggf. mehrere Haftschienen) (ggf. auf der anderen Seite) erfolgen. Durch einen optionalen Überstand des jeweiligen Haftmagneten auf der einen Seite und eine Vertiefung, insbesondere Nut, vorzugswiese für eine entsprechende (Haft-)Schiene (oder sonstigen Vorsprung) (ggf. auf der anderen Seite), kann eine zusätzliche mechanische Absicherung realisiert werden, und zwar gegen ein (versehentliches) Verschieben und/oder Lösen nach unten und/oder oben und/oder nach rechts und/oder nach links. Besonders bevorzugt kann eine mechanische Absicherung in diesem Sinne ohne zusätzlichen Arbeitsaufwand für den Benutzer realisiert werden.

In konkreten Ausführungsformen können die Messmodule (also insbesondere das erste und/oder zweite Messmodul) so konfiguriert sein, dass eine mechanische Verbindung derselben eine elektrische Verbindung bewirkt (bzw., insbesondere ohne weitere Tätigkeit des Anwenders, eine elektrische Verbindung herstellt). Darunter ist insbesondere zu verstehen, dass alleine die mechanische Verbindung der Messmodule (insbesondere mit Hilfe der obigen Positionierhilfe/n) zwingend (aufgrund geometrischer und sonstiger struktureller Konfigurationen der Messmodule) dazu führt, dass auch eine elektrische Verbindung hergestellt wird. Insofern wird auf einfache Art und Weise eine mechanische Verbindung der Messmodule miteinander dazu genutzt, die elektrische Verbindung (z. B. Federkontakt-Verbindung) zu schließen.

Vorzugsweise sind entsprechende (mechanische) Verbindungseinrichtungen und/oder Positionierhilfen separat zu der (jeweiligen) Kontakteinrichtung bzw. den (jeweiligen) Kontakteinrichtungen vorgesehen, beispielsweise in einem Abstand von mindestens 2 cm oder mindestens 5 cm (was bei mehreren mechanischen Verbindungseinrichtungen bzw. Positionierhilfen für mindestens eine, ggf. alle von diesen, gelten soll).

Der ersten und/oder zweiten Kontakteinrichtung kann eine (die jeweilige Kontakteinrichtung vorzugsweise umgebende) Dichtung zugeordnet sein. Die Dichtung befestigt vorzugsweise die (jeweilige) Kontakteinrichtung (an einem Hauptkörper des jeweiligen Messmoduls), beispielsweise durch einen entsprechenden Presssitz und/oder (allgemein) Kraftschluss und/oder Formschluss. Unter einer mechanischen Befestigung in diesem Sinne ist insbesondere eine Befestigung zu verstehen, bei der die entsprechende Kontakteinrichtung ansonsten nicht oder nur lose (bzw. zumindest weniger fest) mit einem Hauptkörper des Messmoduls verbindbar bzw. verbunden wäre (wenn die Dichteinrichtung bzw. Dichtung nicht vorgesehen wäre). Konkret kann die Dichtung eine Abdichtung gegen Feuchtigkeit und/oder Nässe ermöglichen (ggf. zusätzlich auch zu einer elektrische Isolierung zumindest beitragen). In Ausführungsformen kann die Dichtung in eine Steckverbindung integriert sein, die gleichzeitig als mechanische Befestigung für mindestens einen (oder mehrere) Federkontakt-Stift(e) oder Federkontakt(e) dienen kann.

In konkreten Ausführungsformen kann mindestens eine Verbindungseinrichtung (vorzugsweise umfassend eine Befestigungsplatte) vorgesehen sein, wobei die Verbindungseinrichtung konfiguriert ist, die Messmodule (dauerhaft abgesichert, insbesondere durch Verschrauben) miteinander zu verbinden. Unter einer dauerhaften Absicherung ist insbesondere zu verstehen, dass die Messmodule zwar noch voneinander lösbar sind, jedoch nur durch Aufheben mindestens eines Formschlusses, beispielsweise durch Rotation und/oder Verschieben mindestens einer Verriegelungseinrichtung, insbesondere durch Lösen mindestens einer entsprechenden Schraube (oder mehrerer Schrauben).

Konkret kann eine (dauerhafte) Absicherung gegen ein (versehentliches) Lösen der mechanischen (und damit insbesondere auch der elektrischen) Verbindung der Messmodule über eine Befestigung (insbesondere Schraubbefestigung) in einer Bodenplatte (oder mehreren Bodenplatten) von zwei oder mehreren (Mess-) Modulen erfolgen (je nach Anzahl der Module). (Eine) entsprechende Befestigungsplatte(n) kann (können) Teil des Messmodul-Systems sein.

Die erste und/oder zweite Kontakteinrichtung kann konfiguriert sein, um eine elektrische Verbindung mit einer (externen) Spannungsversorgung und/oder einem (externen) Bussignal und/oder einem (externen) Steuersignal zu ermöglichen. Der Begriff "extern" soll sich hier insbesondere auf das Messmodul-System beziehen. In einem weitergefassten System, umfassend das Messmodul-System, kann mindestens eine entsprechende (gegenüber dem Messmodul-System als solches externe) Steuer- und/oder Auswerter-. und/oder Versorgungseinheit enthalten sein, die eine Spannungsversorgung und/oder ein Bussignal und/oder ein Steuersignal bereitstellt. Konkret kann unter "extern" im vorliegenden Zusammenhang verstanden werden, dass die Spannungsversorgung und/oder das Bussignal und/oder das (jeweilige) Steuersignal nicht durch eines der Messmodule des Messmodul-Systems bereitgestellt wird (jedoch ggf. übertragen wird, beispielsweise zu einem weiteren Messmodul).

Ein Anschluss einer Spannungsversorgung und/oder von Bussignalen und/oder Steuersignalen kann über ein und dieselbe Kontakteinrichtung (insbesondere Federkontakt-Stift/Federkontakt-Ausnehmung-Reihe), ggf. einschließlich einer Abdichtung erfolgen (ggf. entsprechend ausgebildet wie die im Zusammenhang mit dem Messmodul erläuterte (Ab-)Dichtung). Ein solcher Anschluss ist vorzugsweise (insbesondere aus Schirmungsgründen) aus Metall gefertigt. Eine mechanische Befestigung erfolgt vorzugsweise durch mindestens eine oder mindestens oder genau zwei (Befestigungs-) Schrauben.

Eine Verbindung von zwei (oder mehr) Messmodulen bzw. Messmodul-Systemen kann über mindestens ein entsprechendes Verbindungskabel erfolgen, und zwar insbesondere für eine Spannungsversorgung und/oder ein Bussignal und/oder ein Steuersignal. Dazu kann die gleiche (ggf. eine komplementäre) Kontakteinrichtung (Federkontakt-Stift-Reihe bzw. Federkontakt-Aufnahme-Reihe) ausgebildet sein, ggf. einschließlich einer Abdichtung. Eine (mechanische) Befestigung kann durch mindestens eine oder mindestens zwei oder genau zwei (Befestigungs-) Schrauben erfolgen.

Die (jeweilige) (Befestigungs-)Schraube kann als Rändelschraube zur (werkzeuglosen) Montage ausgeführt sein.

Ein (jeweiliges) Verbindungskabel kann ein Kontaktbauteil aufweisen, das mindestens einem Kontaktbauteil mindestens eines der Messmodule zumindest im Wesentlichen gleicht. Unter einem Kontaktbauteil ist insbesondere ein Bauteil zu verstehen, das die entsprechenden Kontakte (zur elektrischen Verbindung) aufweist und eine diese Kontakte tragende und gegeneinander positionierende Struktur. Hinsichtlich seiner Dimensionierung kann das Kontaktbauteil vorzugsweise so ausgebildet sein, wie weiter oben im Zusammenhang mit der Kontakteinrichtung vorgeschlagen. Konkret kann die Kontakteinrichtung durch ein entsprechendes Kontaktbauteil gebildet werden (oder ein solches umfassen).

Vorzugsweise ist ein (insbesondere das obige) Verbindungs- und/oder Anschlusskabel vorgesehen, das derart konfiguriert ist, dass ein Abgang des Kabels im Falle eines Anschlusses an ein entsprechendes Messmodul zur Mitte des Messmodules hin erfolgt. Unter einem Abgang zur Mitte des Messmoduls ist insbesondere zu verstehen, dass der Abgang des Kabels (beispielsweise parallel zu einer Oberfläche eines Hauptkörpers des Messmoduls) an einer Stelle positioniert ist, die weiter weg von mindestens einem Rand des Messmoduls angeordnet ist als eine gegenüberliegende Stelle der entsprechenden Kontakteinrichtung. Alternativ oder zusätzlich kann ein solcher Abgang näher an einem Schwerpunkt des Messmoduls liegen als eine Stelle, die dem Abgang gegenüberliegt (in Bezug auf die Kontakteinrichtung).

Für eine verbesserte (optimierte) Ausnutzung eines verfügbaren Bauraums kann der Abgang des (jeweiligen) Verbindungskabels zur Mitte des Messmoduls erfolgen. Damit kann das (Verbindungs- und/oder Anschluss-)Kabel, beispielsweise ein Eingangskabel nach oben und/oder zur Seite weggeführt werden, insbesondere ohne zusätzlichen Bauraum neben den (Mess-) Modulen zu erfordern.

Mindestens ein Messmodul kann mit mindestens einem weiteren Messmodul und/oder einem (dem) Verbindungs- und/oder Anschlusskabel werkzeuglos elektrisch und/oder mechanisch verbindbar sein.

Die obengenannte Aufgabe wird weiterhin gelöst durch ein Verfahren zum Herstellen eines Messmodul-Systems (vorzugsweise der obigen Art) und/oder eines Systems, umfassend das Messmodul-System (vorzugsweise der obigen Art), wobei mehrere zumindest im Wesentlichen identische Kontakt-Elemente, insbesondere Kontakt-Baugruppen bzw. Kontakt-Bauteile), hergestellt werden und mindestens eines der Kontakt-Elemente in ein Verbindungskabel integriert wird und mindestens eines der Kontakt-Elemente (Kontakt-Baugruppen bzw. Kontakt-Bauteile) in mindestens ein Messmodul. Dadurch kann die Herstellung vereinfacht werden bzw. es können Kosten reduziert werden.

Die obengenannte Aufgabe wird weiterhin insbesondere gelöst durch ein Verfahren zum Konfigurieren eines Messmodul-Systems (vorzugsweise der obigen Art) und/oder hergestellt nach dem obigen Verfahren und/oder eines Systems der obigen Art (umfassend vorzugsweise das Messmodul-System), wobei die erste und zweite elektrische Kontakteinrichtung miteinander unmittelbar (insbesondere durch Aneinanderstecken) verbunden werden.

In Ausführungsformen kann eine Übertragung einer Spannungsversorgung und/oder von Bussignalen und/oder Steuersignalen über neun Federkontakte erfolgen. Generell kann eine kabellose Verbindung von mehreren Messmodulen, beispielsweise durch eine Federkontakt-Verbindung und ein Halten durch Magnete, erfolgen.

Eine (ggf. dauerhafte) Befestigung der Messmodule kann ggf. ausschließlich durch eine Schraubverbindung ermöglicht werden (ggf. per Hand).

Bisher nötige Kabel zur Verbindung der Messmodule können entfallen.

Ggf. können bisher nötige Rund-Steckverbinder zur Verbindung der Messmodule entfallen.

Eine Kabel für eine Spannungsversorgung und/oder Bussignale und/oder Steuersignale kann an denselben Positionen und/oder mit einem entsprechenden Verfahren am Messmodul kontaktiert werden, wie die Messmodule untereinander. Dadurch können Bauteile eingesetzt werden, die gleichzeitig in den Messmodulen und den Kabeln (bzw. Kabel-Adaptern) zum Einsatz kommen können.

Eine werkzeuglose Befestigung von Anschlusskabeln (Verbindungskabeln) ist vorzugsweise möglich (ggf. bei gleichzeitig voller mechanischer Belastbarkeit).

Gegebenenfalls ist eine zentrale oder dezentrale Nutzung möglich (oder eine gemischte zentrale/dezentrale Nutzung).

Ein Bauraum-optimierter Aufbau oder eine entsprechende optimierte Verkabelung kann ebenfalls realisiert werden.

Das (jeweilige) Messmodul ist vorzugsweise konfiguriert, um (in Zusammenwirken mit mindestens einem entsprechenden Sensor) eine Temperatur und/oder eine elektrische Größe (z. B. Spannung, Strom, Widerstand und/oder Leistung) und/oder eine Feuchtigkeit (allgemein einen die Umgebung betreffenden Parameter) zu messen.

Weitere Ausführungsformen ergeben sich aus den Unteransprüchen.

Nachfolgend wird die Erfindung auch hinsichtlich weiterer Merkmale und Vorteile anhand von Ausführungsbeispielen näher beschrieben, die anhand der Abbildungen näher erläutert werden.

Hierbei zeigen:
- Fig. 1: eine schematische Darstellung eines Computers sowie eines Netzteiles mit einem Anschlusskabel;
- Fig. 2: eine erste Schrägansicht eines Ausschnittes des Anschlusskabels gemäß Fig. 1;
- Fig. 3: eine zweite Schrägansicht des Ausschnittes gemäß Fig. 2;
- Fig. 4: eine schematische Schrägdarstellung eines Messmoduls mit einem Ausschnitt eines Verbindungs- bzw. Anschlusskabels;
- Fig. 5: eine weitere Darstellung eines Verbindungskabels;
- Fig. 6: eine schematische Darstellung von zwei Messmodulen einschließlich Verbindungskabel;
- Fig. 7: ein Messmodul in einer ersten Seitenansicht;
- Fig. 8: das Messmodul gemäß Fig. 7 in einer zweiten Seitenansicht;
- Fig. 9: das Messmodul gemäß Fig. 7 und 8 in einem Eckausschnitt;
- Fig. 10: das Messmodul gemäß Fig. 9 in einem weiteren Eckausschnitt;
- Fig. 11: ein Messmodul-System in einer Draufsicht;
- Fig. 12: das Messmodul-System gemäß Fig. 11 in einer Schrägdarstellung.

In der nachfolgenden Beschreibung werden für gleiche und gleich wirkende Teile dieselben Bezugsziffern verwendet.

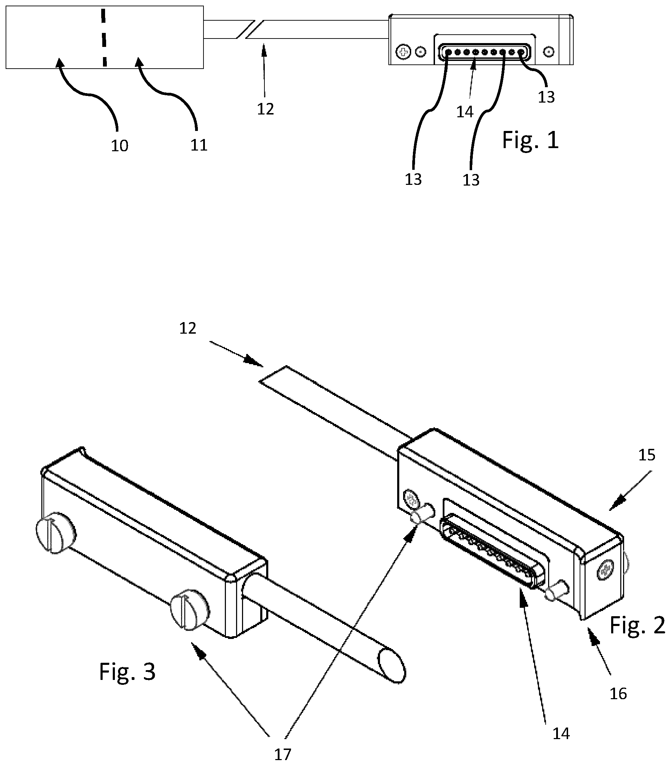

Fig. 1 zeigt (hochschematisch) einen Computer 10 sowie ein Netzteil 11, das wiederum mit einem Anschlusskabel 12 verbunden ist bzw. ein solches aufweist.

Das Anschlusskabel 12 ist auch ausschnittsweise weiter in Fig. 2 und 3 dargestellt. Das Kabel kann konkret Versorgungsleitungen und CAN-Busleitungen aufweisen.

Das Anschlusskabel 12 weist eine Reihe von Federkontakt-Stiften 13 (alternativ: entsprechende Stiftaufnahmen) als Bestandteile einer Kontakteinrichtung 14 auf. Die Kontakteinrichtung 14 kann hier wiederum (siehe Fig. 2 und 3) in einem Gehäuse 15 (Adaptergehäuse) angeordnet sein bzw. ein solche umfassen. Gegebenenfalls ist das Gehäuse 15 (Adaptergehäuse) von den übrigen Teilen des Anschlusskabels 12 trennbar (bzw. das eigentliche Anschlusskabel in das Adaptergehäuse einsteckbar und/oder mit diesem verbindbar).

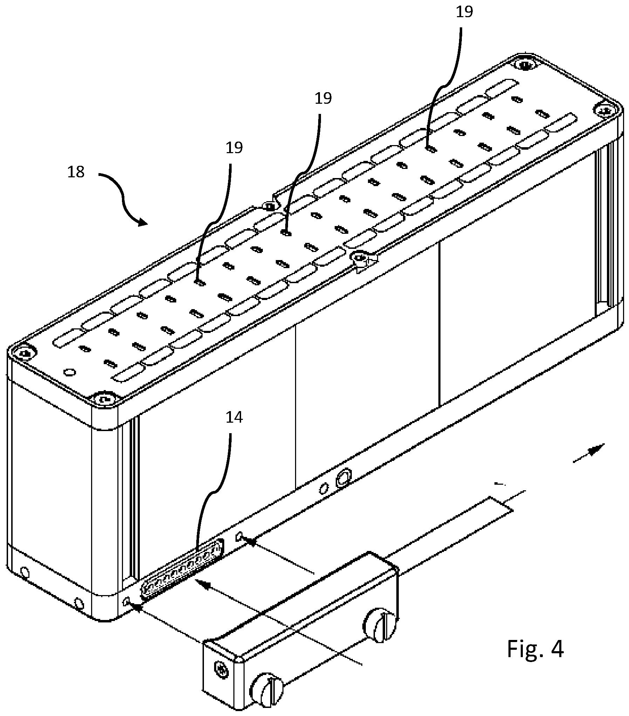

Das Gehäuse 15 umfasst eine Verdrehsicherung 16, hier vorzugsweise konkret einer Verdrehsicherungs-Nase (allgemein: Vorsprung). Die Verdrehsicherung 16 ist vorzugsweise hinsichtlich ihrer Kontur an eine entsprechende Struktur eines Messmoduls (siehe Fig. 4) angepasst, beispielsweise an eine (ggf. abgerundete) Ecke desselben, so dass die Struktur des Messmoduls (bzw. die Ecke) gemeinsam mit der Verdrehsicherung 16 ein Verdrehen der Kontakteinrichtung 14 bzw. des Gehäuses 15 verhindert. Dieser Aspekt wird hiermit als unabhängiger, vorzugsweise jedoch weiterbildender, Aspekt der Erfindung offenbart.

Weiterhin sind in dem Gehäuse 15 bzw. zugeordnet der Kontakteinrichtung 14 Befestigungsschrauben 17 zugeordnet, mit denen das Gehäuse 15 (und damit Anschlusskabel 12) an einem Messmodul 18 (siehe Fig. 4) (dauerhaft bzw. unter Verhinderung eines ungewollten Lösens) befestigt werden kann.

Das in Fig. 4 gezeigte Messmodul 18 weist eine Kontakteinrichtung 14 auf, die komplementär zu der Kontakteinrichtung 14 des Anschlusskabels 12 gemäß Fig. 1-3 ausgebildet ist und gemeinsam mit dieser eine elektrische Verbindung (zur Übertragung von einer Energieversorgung und/oder einem Bussignal und/oder einem Steuersignal) ermöglicht. Das Messmodul 18 weist weiterhin eine Vielzahl von Anschlüssen 19 zum Anschließen von Mess-Sensoren oder dergleichen auf.

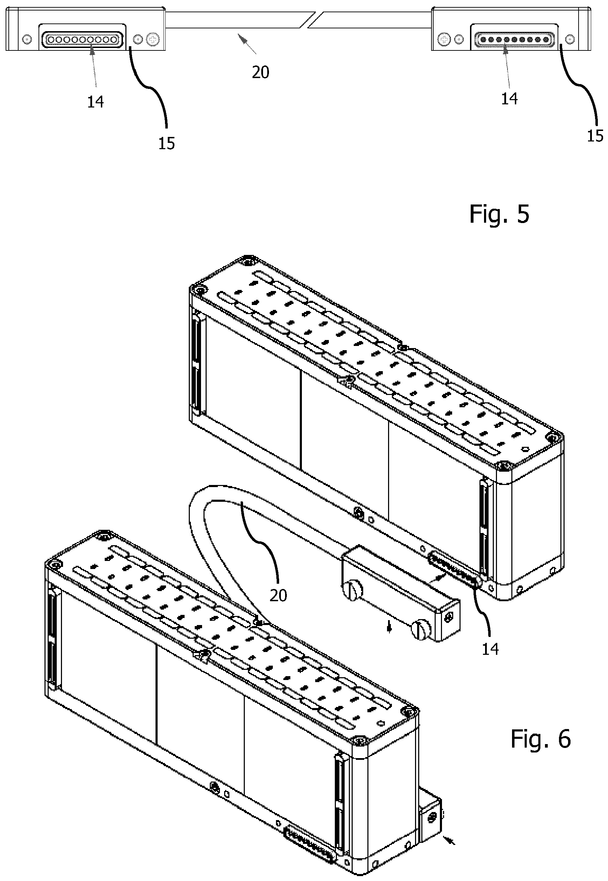

Fig. 5 zeigt in schematischer Sicht ein Verbindungskabel 20 zur Verbindung von zwei Messmodulen 18, wie in Fig. 6 gezeigt. Das Verbindungskabel 20 umfasst ein (Adapter-)Gehäuse 15 bzw. eine entsprechende Anschlusseinrichtung 14 entsprechend dem Anschlusskabel 12 aus Fig. 1-3 und ein weiteres (Adapter-)Gehäuse 15 bzw. Anschlusseinrichtung 14 am anderen Ende des Verbindungskabels 20. Die Anschlusseinrichtungen 14 an den beiden Enden des Verbindungskabels unterscheiden sich dadurch, dass im einen Fall Vorsprünge (insbesondere Feder-Kontakt-Stifte) als elektrische Kontakte ausgebildet sind und im anderen Fall entsprechende Ausnehmungen (insbesondere Feder-Kontakt-Ausnehmungen). Die beiden in Fig. 6 gezeigten Messmodule weisen dann entsprechend komplementäre Kontakteinrichtungen 14 auf, um das Verbindungskabel 20 zur Verbindung der Messmodule anzuschließen.

Insofern kann das Anschlusskabel bzw. das entsprechende Gehäuse 15 (Adapter) gemäß Fig. 1-3 an derselben Stelle kontaktiert werden wie die Messmodule 18 untereinander. Konkret kann das Gehäuse 15 (bzw. der Kabeladapter) übliche Rundstecker an bisherigen Kabeln ersetzen und/oder Rundbuchsen bei bisherigen Messmodulen (bei gleicher IP-Schutzklasse und Pol-Zahl sowie Stromfestigkeit).

Die Messmodule können auch (vorzugsweise) unmittelbar miteinander verbunden werden, so dass bisher üblicher Brückenkabel entfallen können, was nachfolgend weiter erläutert wird.

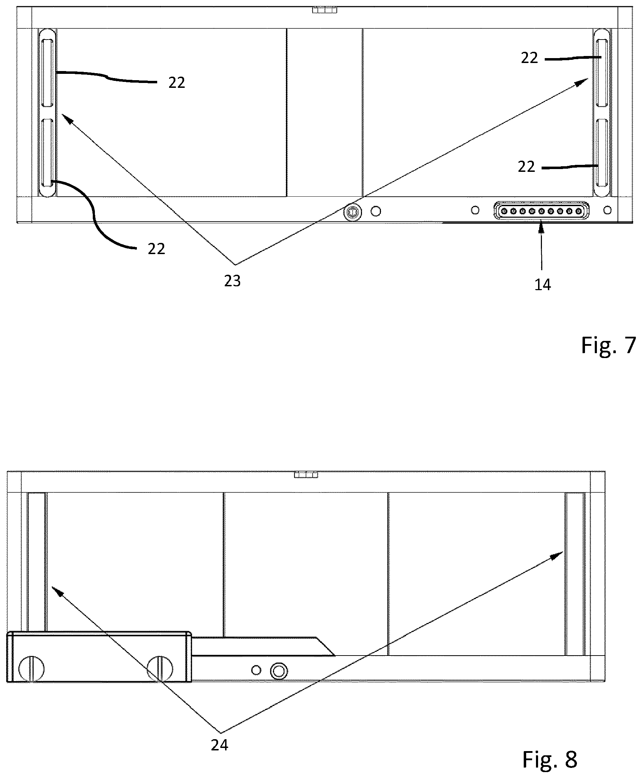

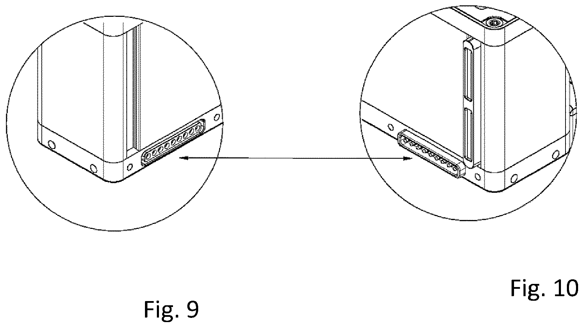

Konkret ist in Fig. 7 eine Seite eines Messmoduls erkennbar, die mehrere (hier vier) Haftmagnete 22 aufweist, sowie (hier zwei) mechanische Führungen 23 (in der vorzugsweise mindestens zwei Haftmagnete angeordnet ist). Ein entsprechend damit korrespondierende Rückseite des Messmoduls (bzw. eines weiteren Messmoduls 18) kann (siehe Fig. 8) entsprechende Gegenstrukturen 24 aufweisen, insbesondere entsprechende Haftschienen für die Magnete 22 und die mechanische Führung 23 gemäß Fig. 7. Die jeweilige Gegenstruktur 24 kann schienenförmig ausgebildet sein. Dadurch können zwei Messmodule, die entsprechend Fig. 7 und 8 konfiguriert sind, auf einfache Art und Weise miteinander (mechanisch) verbunden bzw. zumindest gegeneinander positioniert werden (so dass dann beispielsweise durch eine weiter Befestigungseinrichtung, insbesondere umfassend mindestens eine Platte und/oder mindesten eine Schraubverbindung, eine zuverlässige und genaue Befestigung auf einfache Art und Weise erreicht werden kann). Gleichzeitig (wie in Fig. 9 und 10 erkennbar) kann dadurch eine elektrische Verbindung erfolgen, nämlich indem die entsprechenden Kontakteinrichtungen 14 der miteinander mechanisch verbundenen Messmodule (automatisch bzw. ohne weiteren Verbindungsschritt) miteinander in Eingriff kommen und dadurch eine elektrische Verbindung hergestellt wird.

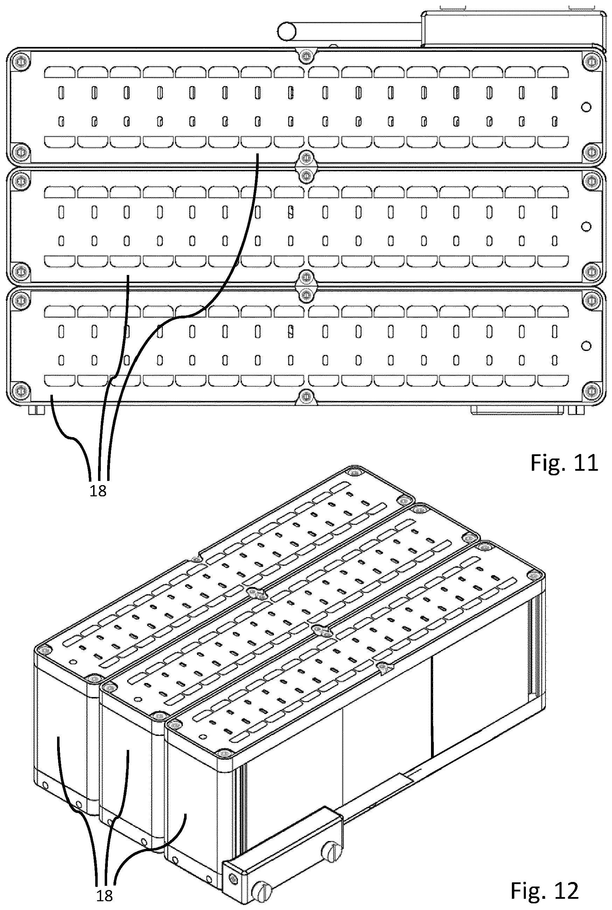

In den Fig. 11 und 12 ist ein Messmodul-System mit (hier) drei Messmodulen 18 erkennbar, die miteinander (insbesondere durch unmittelbares Aneinanderanordnen) mechanisch und elektrisch verbunden sind. Eines der beiden randseitigen Messmodule ist hier mit einem Anschlusskabel zum Anschließen an ein Netzteil bzw. Computer verbunden.

An dieser Stelle sei darauf hingewiesen, dass alle oben beschriebenen Teile jeweils für sich - auch ohne im jeweiligen Zusammenhang zusätzlich beschriebene Merkmale, selbst wenn diese nicht explizit als optionale Merkmale im jeweiligen Zusammenhang individuell kenntlich gemacht worden sind, z. B. durch Verwendung von: insbesondere, vorzugsweise, beispielsweise, z. B., ggf., runden Klammern etc. - oder in Kombination oder jeglicher Unterkombination als eigenständige Ausgestaltungen bzw. Weiterbildungen der Erfindung, wie sie insbesondere in der Beschreibungseinleitung sowie den Ansprüchen definiert ist, anzusehen sind. Abweichungen hiervon sind möglich. Konkret sei darauf hingewiesen, dass das Wort insbesondere oder runde Klammern, keine im jeweiligen Kontext zwingende Merkmale kennzeichnen.

### Bezugszeichen

- 10: Computer
- 11: Netzteil
- 12: Anschlusskabel
- 13: Federkontakt-Stift
- 14: Kontakteinrichtung
- 15: Gehäuse (Adaptergehäuse/Adapter)
- 16: Verdrehsicherung
- 17: Befestigungsschrauben
- 18: Messmodul
- 19: Anschluss
- 20: Verbindungskabel
- 22: (Haft-) Magnet
- 23: mechanische Führung
- 24: Gegenstruktur

## Patentansprüche

1. Messmodul-System mit mindestens zwei Messdaten erzeugenden Messmodulen, die mit einer Steuer- und/oder Auswerteeinrichtung und/oder miteinander Daten austauschen, wobei mindestens eines der mindestens zwei Messmodule mindestens eine erste integrale, insbesondere ortsfeste, elektrische Kontakteinrichtung (14) aufweist und mindestens ein weiteres der mindestens zwei Messmodule mindestens eine zweite integrale, insbesondere ortsfeste, elektrische Kontakteinrichtung (14) aufweist, wobei die erste und zweite elektrische Kontakteinrichtung (14) miteinander unmittelbar, insbesondere durch Aneinanderstecken, verbindbar oder verbunden sind.

2. Messmodul-System nach Anspruch 1,
**dadurch gekennzeichnet, dass**
die erste und/oder zweite Kontakteinrichtung (14) mindestens eine Steckverbinder-Einrichtung, vorzugsweise Feder-Steckverbinder-Einrichtung, umfasst/umfassen oder als solche ausgebildet ist/sind, insbesondere umfassend mindestens einen Stecker und/oder mindestens eine Buchse.

3. Messmodul-System nach Anspruch 1 oder 2,
**dadurch gekennzeichnet, dass**
mindestens ein Messmodul (18) eine erste Positionierhilfe, vorzugsweise umfassend eine Ausnehmung und/oder einen Vorsprung und/oder einen Magneten, umfasst und das mindestens eine und/oder mindesten ein weiteres Messmodul (18) eine vorzugsweise dazu komplementäre zweite Positionierhilfe, vorzugsweise umfassend eine Ausnehmung und/oder einen Vorsprung und/oder Magneten, umfasst, die vorzugsweise miteinander zur Positionierung der Messmodule gegeneinander und/oder mechanischen Verbindung der Messmodule miteinander, verbindbar sind, wobei die Positionierhilfen vorzugsweise separat gegenüber der Kontakteinrichtung (14) vorgesehen sind.

4. Messmodul-System nach einem der vorhergehenden Ansprüche,
**dadurch gekennzeichnet, dass**
die Messmodule so konfiguriert sind, dass eine mechanische Verbindung derselben eine elektrische Verbindung bewirkt.

5. Messmodul-System nach einem der vorhergehenden Ansprüche,
**dadurch gekennzeichnet, dass**
der ersten und/oder zweiten Kontakteinrichtung (14) eine, die jeweilige Kontakteinrichtung (14) vorzugsweise umgebende, Dichtung zugeordnet ist, die vorzugsweise die jeweiligen Kontakteinrichtung (14) mechanisch befestigt.

6. Messmodul-System nach einem der vorhergehenden Ansprüche,
**dadurch gekennzeichnet, dass**
mindestens eine Verbindungseinrichtung, vorzugsweise umfassend eine Befestigungsplatte, vorgesehen ist, wobei die Verbindungseinrichtung konfiguriert ist, die Messmodule dauerhaft abgesichert, insbesondere durch Verschrauben, miteinander zu verbinden.

7. Messmodul-System nach einem der vorhergehenden Ansprüche,
**dadurch gekennzeichnet, dass**
die erste und/oder zweite Kontakteinrichtung (14) konfiguriert ist/sind, um eine elektrische Verbindung mit einer Spannungsversorgung und/oder einem Bussignal und/oder einem Steuersignal zu ermöglichen.

8. Messmodul-System nach einem der vorhergehenden Ansprüche,
**dadurch gekennzeichnet, dass**
ein Verbindungskabel (12, 20) vorgesehen ist, das ein Kontaktbauteil aufweist, das mindestens einem Kontaktbauteil mindestens eines der Messmodule gleicht.

9. Messmodul-System nach einem der vorhergehenden Ansprüche,
**dadurch gekennzeichnet, dass**
ein/das Verbindungskabel (12, 20) vorgesehen ist, das derart konfiguriert ist, dass ein Abgang des Kabels im Falle eines Anschlusses an ein entsprechendes Messmodul (18) zur Mitte des Messmodules hin erfolgt.

10. Messmodul-System nach einem der vorhergehenden Ansprüche,
**dadurch gekennzeichnet, dass**
mindestens ein Messmodul (18) mit mindestens einem weiteren Messmodul (18) und/oder einem/dem Verbindungskabel (12, 20) werkzeuglos elektrisch und/oder mechanisch verbindbar ist.

11. System, umfassend das Messmodul-System nach einem der vorhergehenden Ansprüche sowie mindestens eine Steuer- und/oder Auswerteeinrichtung.

12. Verfahren zum Herstellen eines Messmodul-Systems nach einem der vorhergehenden Ansprüche 1 bis 10 und/oder eines Systems nach dem unmittelbar vorhergehenden Anspruch, wobei mehrere zumindest im Wesentlichen identische Kontakt-Elemente, insbesondere Kontakt-Baugruppen, hergestellt werden und mindestens eines der Kontakt-Elemente in ein Verbindungskabel (12, 20) integriert wird und mindestens eines der Kontakt-Elemente in ein Messmodul.

13. Verfahren zum Konfigurieren eines Messmodul-Systems nach einem der vorhergehenden Ansprüche 1 bis 10 und/oder hergestellt nach dem unmittelbar vorhergehenden Anspruch und/oder eines Systems nach dem Anspruch 11, wobei die erste und zweite elektrische Kontakteinrichtung (14) miteinander unmittelbar, insbesondere durch Aneinanderstecken, verbunden werden.
